# EUROPÄISCHE PATENTSCHRIFT

(11) **EP 0 802 094 B1**
(45) Veröffentlichungstag und Bekanntmachung des Hinweises auf die Patenterteilung: **11.02.2004**
(21) Anmeldenummer: 97106590.9
(22) Anmeldetag: 21.04.1997
(51) Int. Cl.: B60R 22/20

(54) **Höhenverstellung für den Umlenkbeschlag eines Sicherheitsgurts**
Safety belt return anchor height adjustment
Réglage en hauteur d'un renvoi de ceinture de sécurité

(30) Priorität: 19.04.1996 DE 19615652; 03.07.1996 DE 19626799
(43) Veröffentlichungstag der Anmeldung: 22.10.1997
(73) Patentinhaber: TAKATA-PETRI (Ulm) GmbH, 89081 Ulm (DE)
(72) Erfinder: Pleyer, Matthias, 89250 Senden (DE); Tetzner, Marko, 09548 Deutscheinsiedel (DE)
(74) Vertreter: Maikowski, Michael, Dipl.-Ing. Dr.

(56) Entgegenhaltungen:
- DE-A- 3 713 137
- DE-A- 3 802 323
- DE-A- 3 938 612
- US-A- 4 989 900

## Beschreibung

Die vorliegende Erfindung betrifft eine Einrichtung zur automatisch höhenverstellbaren Lagerung des oberen Befestigungs- oder Umlenkbeschlages für einen Sicherheitsgurt in einem Fahrzeug, mit einer im wesentlichen vertikal angeordneten Schiene, welche seitliche Rastaufnahmen aufweist, mit einem längs der Schiene verschiebbar geführten Gleitstück, in welchem eine Klinke mit einer seitlich vorstehenden Einrastnase zwischen einer Einraststellung und einer Ausraststellung um eine zur Schienenlängsrichtung senkrechte Achse verschwenkbar gelagert ist, mit einem an der Klinke in der einen Verschieberichtung angreifenden, in Abhängigkeit von der Sitzstellung des zugeordneten Fahrzeugsitzes gesteuerten Verstellelement und mit einem mit dem Gleitstück beweglichen Lager für den Umlenkbeschlag, welches derart an der Klinke angreift, daß die Klinke bei einer Belastung des Lagers durch den Gurt in ihre Einraststellung verschwenkt wird.

Eine derartige Einrichtung ist beispielsweise aus der DE 38 02 323 C2 bekannt. Bei dieser bekannten Einrichtung ist die Klinke um einen durch das Gleitstück vorgegebenen Schwenkpunkt verschwenkbar in dem Gleitstück gelagert. Auf der einen Seite des Schwenkpunktes greift an der Klinke das Verstellelement in der einen Schwenkrichtung an, während sich die Klinke auf der anderen Seite des Schwenkpunktes an einem in der umgekehrten Schwenkrichtung wirkenden Rückstellelement abstützt. Hierdurch ist bei einer Verschiebung des Gleitstücks längs der Schiene ohne Belastung des Lagers für den Umlenkbeschlag gewährleistet, daß die Klinke in ihrer Ausraststellung verbleibt.

Das Lager für den Umlenkbeschlag ist bei dieser bekannten Einrichtung mit dem Gleitstück fest verbunden. Bei einer Belastung des Lagers, wie sie insbesondere bei einem Unfall auftritt, wird daher das Gleitstück mit Schwenkpunkt in der Schiene nach unten bewegt, während die Klinke auf der einen Seite des Schwenkpunktes von dem durch die Sitzstellung festgelegten Verstellelement gehalten wird. Dadurch verschwenkt die Klinke und rastet in eine der seitlichen Rastaufnahmen der Schiene ein, so daß das Gleitstück mit dem Lager für den Umlenkbeschlag gegen eine weitere Verschiebung längs der Schiene blockiert ist.

Um bei einer derartigen Einrichtung sicherzustellen, daß das Gleitstück nicht nur in der einen Verschieberichtung sondern auch in der entgegengesetzten Verschieberichtung an die gewünschte Position automatisch verschoben werden kann, ist ein an dem Gleitstück in der entsprechend anderen Verschieberichtung angreifendes zusätzliches Rückstellelement erforderlich. Insgesamt ergibt sich damit eine relativ aufwendige Konstruktion, was sich sowohl auf die Herstellungskosten als auch auf die Funktionssicherheit der Einrichtung negativ auswirkt.

Der vorliegenden Erfindung liegt daher die Aufgabe zugrunde, eine Einrichtung der genannten Art so weiterzubilden, daß diese Nachteile nicht auftreten. Insbesondere soll die Einrichtung, trotz Gewährleistung einer sicheren Verschiebung des Gleitstücks in beiden Richtungen, vom Aufbau her vereinfacht werden, um die Herstellungskosten zu senken und die Funktionssicherheit zu erhöhen.

Diese Aufgabe wird bei einer Einrichtung das eingangs genannten Art erfindungsgemäß dadurch gelöst, daß ein an der Klinke in der anderen Verschieberichtung angreifendes Rückstellelement vorgesehen ist, und daß das Verstellelement und das Rückstellelement an der Klinke an zwei auf derselben Seite der Schwenkachse angeordneten Punkten angreifen.

Durch die Anordnung des Rückstellelements und des Verstellelements derart, daß sie an der Klinke an auf derselben Seite der Schwenkachse angeordneten Punkten in entgegengesetzter Richtung angreifen, ist sichergestellt, daß bei einer Betätigung des Verstellelements kein resultierendes Drehmoment auf die Klinke wirkt, die Klinke also während der Verschiebung des Gleitstücks ohne Belastung des Lagers für den Umlenkbeschlag in ihrer Ausraststellung verbleibt. Das erfindungsgemäß vorgesehene Rückstellelement hat also eine Doppelfunktion. Zum einen überträgt das Rückstellelement auf das Gleitstück eine dem Verstellelement entgegenwirkende Verschiebekraft und zum anderen verhindert das Rückstellelement ein Einrasten der Klinke während des Verstellens der Einrichtung, also bei unbelastetem Lager. Ein das Einrasten verhinderndes separates Rückstellelement kann daher entfallen. Damit erhält man eine in der Funktion verbesserte und dennoch im Aufbau einfache Einrichtung, die sich durch verringerte Herstellungskosten und erhöhte Haltbarkeit auszeichnet, denn es sind weniger Teile vorhanden, die einem Verschleiß unterliegen bzw. ausfallen können.

Nach einer Ausgestaltung der Erfindung ist das Lager für den Umlenkbeschlag an der Klinke angeordnet, wobei die Anordnung zu dem Angriffspunkt des Verstellelements horizontal versetzt vorgesehen ist. Diese versetzte Anordnung bewirkt, daß bei einer Belastung des Lagers für den Umlenkbeschlag die Klinke relativ zu dem Gleitstück in ihre Einraststellung verschwenkt wird, denn der vom Gurt auf das Lager übertragenen Zugbewegung nach unten wirkt das durch die Sitzstellung festgelegte Verstellelement entgegen. Die vom Lager aufgenommene Kraft wird dadurch direkt auf die Klinke übertragen, so daß das Gleitstück nicht für diese hohe Kraft ausgelegt sein muß. An dem Gleitstück ist an sich nicht einmal ein Drehlager erforderlich, obwohl ein solches nach einer bevorzugten Ausgestaltung der Erfindung vorgesehen ist.

Nach einer weiteren Ausgestaltung der Erfindung ist das an der Klinke angeordnete Lager für den Umlenkbeschlag auf der Drehachse der Klinke im Gleitstück vorgesehen. Eine vom Gurt auf das Lager für den Umlenkbeschlag übertragene Kraft greift daher vertikal nach unten an der Drehlagerachse an und versucht, die Klinke längs der Schiene nach unten zu verschieben. Aufgrund des zum Lager des Umlenkbeschlages versetzt an der Klinke angreifenden Verstellelements ergibt sich dabei ein resultierendes Drehmoment, welches zu einem Verschwenken der Klinke und deren Einrasten in die seitlichen Rastaufnahmen der Schiene führt.

Nach einer weiteren Ausgestaltung der Erfindung weist die Klinke eine Durchführung auf, durch welche ein längsgestufter Zapfen mit seinem schmaleren, als Lager für den Umlenkbeschlag ausgebildeten Abschnitt hindurchgeführt ist, wobei der breitere Abschnitt des Zapfens als Drehlagerzapfen ausgebildet ist, welcher in einer entsprechenden kreisförmigen Ausnehmung des Gleitstücks drehbar gelagert ist. Durch diese Ausgestaltung wird zum einen eine einfache Drehlagerung der Klinke im Gleitstück bewirkt. Zum anderen hat die gestufte Ausgestaltung des Zapfens den Vorteil, daß der Zapfen bei einer Belastung des Umlenkbeschlags durch den Gurt nicht aus der Klinke herausgezogen werden kann. Um auch bei normalem Betrieb der Einrichtung einen sicheren Sitz des Lagers für den Umlenkbeschlag in der Klinke zu gewährleisten, ist der gestufte Zapfen mit seinem schmaleren Abschnitt bevorzugt mit einem Preßsitz in die Klinke eingesetzt.

Nach einer weiteren Ausgestaltung der Erfindung ist die Klinke in einem zweiteiligen Gehäuse gelagert, dessen Gehäuseunterteil als Gleitstück dient und dessen Gehäuseoberteil zusammen mit der Klinke gegenüber dem Gehäuseunterteil in der Schienenebene verschwenkbar ist, wobei das Verstellelement und das Rückstellelement am Gehäuseoberteil angreifen. Diese Ausgestaltung ermöglicht eine einfache Anbringung des Verstellelements und des Rückstellelements an dem Gehäuseoberteil, welches insbesondere aus Kunststoff hergestellt sein kann, und zugleich eine Ausbildung der Klinke aus einem besonders stabilen Material, insbesondere Metall.

Als Verstellelement zur Verschiebung des Gleitstücks längs der Schiene dient bevorzugt ein Seil, insbesondere ein Bowdenzug. Der Bowdenzug ist dabei bevorzugt über eine Umlenkeinrichtung geführt und greift von oben her an der Klinke oder am Gehäuseoberteil an. Das andere Ende des Bowdenzuges wird beim Verschieben des Fahrzeugsitzes derart bewegt, daß der Bowdenzug in der vordersten Sitzstellung am weitesten ausgefahren ist, so daß sich der Umlenkbeschlag in seiner untersten Stellung befindet. Umgekehrt zieht der Bowdenzug den Umlenkbeschlag in seine oberste Stellung, wenn sich der Fahrzeugsitz in seiner hintersten Stellung befindet. Am unteren Ende der Klinke oder des Gehäuseoberteils greift bei dieser Ausgestaltung entsprechend das Rückstellelement an, welches den Umlenkbeschlag daher in seine unterste Stellung vorspannt. Beim Ausfahren des Bowdenzuges wird dadurch sichergestellt, daß der Umlenkbeschlag in die gewünschte Stellung nach unten verschoben wird.

Nach einer weiteren Ausgestaltung der Erfindung ist als Rückstellelement eine Spiralfeder vorgesehen, wobei die Spiralfeder bevorzugt in einer in der Schiene verankerbaren Federhülse gelagert ist, welche eine zentrale Durchführung für einen Befestigungsbolzen aufweist. Die Federhülse dient somit zusätzlich zur Lagerung der Spiralfeder auch zur Befestigung der Schiene am Fahrzeug. Des weiteren kann die Federhülse auch mit einer seitlichen Aufnahme für das Ende des Mantels des Bowdenzugs versehen sein, so daß die Federhülse noch eine weitere Funktion übernimmt. Durch diese Mehrzweckfunktion der Federhülse werden die Herstellungsund Montagekosten weiter gesenkt.

Nach einer weiteren Ausgestaltung der Erfindung ist an der Klinke ein Spreizfederelement vorgesehen, welches durch die zwischen Verstellelement und Rückstellelement wirkende Spannkraft in ungespreizter Stellung gehalten wird, wobei das Spreizfederelement so zwischen Klinke und Gleitstück oder zwischen Klinke und Schiene angeordnet ist, daß die Klinke bei Wegfall der Spannkraft von dem Spreizfederelement in Richtung auf ihre Einraststellung belastet wird. Durch das Spreizfederelement wird vorteilhafterweise sichergestellt, daß die Klinke auch bei einem Defekt des Verstellelements oder des Rückstellelements oder eines damit verbundenen Teils, beispielsweise bei einem Bruch oder Aushängen des Bowdenzuges, sicher einrastet und das Gleitstück mit dem Lager für den Umlenkbeschlag gegen eine vertikale Verschiebung blockiert wird. Bei einem Defekt des Verstellelements fällt die Spannkraft weg, so daß das Spreizfederelement aufspreizt und die Klinke in ihre Einraststellung verschwenkt wird.

Bevorzugt ist das Spreizfederelement als Bügel mit zwei federnden Schenkeln ausgebildet, der sich in gespreiztem Zustand mit seinem einen Schenkel an der Klinke und mit seinem anderen Schenkel am Gleitstück abstützt, wobei die Spannweite des Bügels in Abhängigkeit von der Spannkraft veränderlich ist. Bei vorhandener Spannkraft werden die beiden Schenkel des Bügels so weit zusammengeschwenkt, daß der Bügel keine Verschwenkkraft auf die Klinke ausübt. Fällt die Spannkraft weg, spreizt der Bügel auf und belastet die Klinke in Einrastrichtung.

Nach einer weiteren Ausgestaltung der Erfindung weist die Klinke eine Anlagekante mindestens für jeweils einen Teil der beiden Schenkel des Bügels auf und wird der Bügel durch die Spannkraft so gegen die Anlagekante gehalten, daß die beiden Schenkel so weit zusammengeschwenkt sind, daß die Klinke von dem Bügel entlastet ist. Die Anlagekante kann dabei bevorzugt durch eine Ausnehmung im Bereich des Angriffspunkts des Verstellelements gebildet sein, und das Verstellelement kann bevorzugt an der Verbindungsstelle der beiden Schenkel des Bügels angreifen und diesen gegen die Anlagekante ziehen. Durch diese Ausgestaltung ist das Spreizfederelement in geschickter Weise in die Klinke integriert und wird durch das Verstellelement, beispielsweise den Bowdenzug, in ungespreizter Stellung gehalten, solange kein Bruch auftritt. Bei einem Bruch des Bowdenzugs oder einem unbeabsichtigten Aushängen desselben, fällt dagegen die Zugkraft des Bowdenzugs auf den Bügel weg, so daß dieser aufspreizt und durch seine beiden Schenkel die Klinke in Einrastrichtung belastet.

Um bei einer Einrichtung zur automatischen Höhenverstellung des Umlenkbeschlages zusätzlich eine individuelle Anpassung der Höhe des Umlenkbeschlages zu ermöglichen, ist nach einer weiteren Ausgestaltung der Erfindung vorgesehen, daß der Abstand der Umlenkeinrichtung für den Bowdenzug vom oberen Ende der Schiene manuell verstellbar ist. Bei jeder über die Sitzstellung eingestellten Länge des Bowdenzuges kann somit die dadurch vorgegebene Höhe des Umlenkbeschlages über einen bestimmten Bereich zusätzlich verändert werden. Damit kann der Tatsache Rechnung getragen werden, daß die von einer Person gewählte Sitzstellung nicht immer vollständig mit ihrer Körpergröße bzw. Schulterhöhe korreliert.

Für die zusätzliche manuelle Verstellung weist die Umlenkeinrichtung nach einer weiteren Ausgestaltung der Erfindung ein um eine im wesentlichen horizontale Achse drehbar gelagertes Hebelelement auf, welches ein Umlenkelement für den Bowdenzug und ein Betätigungselement trägt, wobei das Umlenkelement näher an der Drehachse des Hebelelementes angeordnet ist als das Betätigungselement. Auf diese Weise wird die für eine manuelle Verstellung erforderliche Kraft vorteilhafterweise gering gehalten. Dies ist insbesondere auch deshalb wichtig, weil bei der manuellen Verstellung des Umlenkelements der höhenverstellbare Umlenkbeschlag den doppelten Weg zurücklegt wie das Betätigungselement.

Zur Umlenkung des Bowdenzugs ist nach einer weiteren Ausgestaltung der Erfindung bevorzugt eine Umlenkrolle vorgesehen. Die bei der Betätigung des Bowdenzugs auftretende Reibung wird dadurch verringert, was einerseits die Funktionssicherheit der Einrichtung erhöht und andererseits eine zusätzliche manuelle Höhenverstellung erleichtert.

Durch an zwei einander gegenüberliegenden Seiten der Schiene vorgesehene Rastaufnahmen ist die erfindungsgemäße Einrichtung für beidseitige Benutzung in einem Kraftfahrzeug geeignet. Alle Teile der erfindungsgemäßen Einrichtung mit Ausnahme des Gehäuseoberteils können dann sowohl für linkswie auch für rechtsseitigen Einbau verwendet werden.

An ihrem oberen Ende ist die Schiene bevorzugt mit Schlitzen zum Einhängen in eine am Fahrzeug vorhandene Aufnahme versehen. Die Montage der erfindungsgemäßen Einrichtung wird dadurch erheblich erleichtert. Die Schiene wird in die beispielsweise an der B-Säule des Fahrzeugs vorhandene Aufnahme von unten her eingehängt, und muß anschließend nur noch mittels des einzigen durch die Federhülse geführten Befestigungsbolzens an der B-Säule befestigt werden.

Ausführungsbeispiele der Erfindung sind in der Zeichnung dargestellt und werden nachfolgend beschrieben. Es zeigen, jeweils in schematischer Darstellung:
- Fig. 1: eine perspektivische Draufsicht auf eine erfindungsgemäße Einrichtung,
- Fig. 2: eine Explosionsdarstellung der Einrichtung von Fig. 1,
- Fig. 3: ein Detail von Fig. 2 in vergrößerter Seitenansicht,
- Fig. 4: eine ebenfalls vergrößerte Vorderansicht auf ein anderes Detail von Fig. 2,
- Fig. 5: eine vergrößerte Explosionsdarstellung einer Variante der erfindungsgemäßen Einrichtung,
- Fig. 6: einen Schnitt durch einen Teil einer weiteren Variante der erfindungsgemäßen Einrichtung in gespanntem Zustand, und
- Fig. 7: eine Fig. 6 entsprechende Darstellung dieser Variante in gelöstem Zustand.

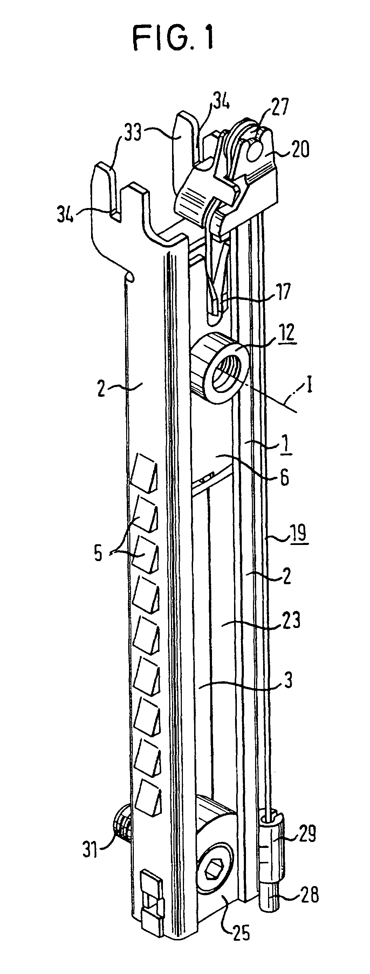

Die in Fig. 1 dargestellte erfindungsgemäße Höhenverstelleinrichtung für den Umlenkbeschlag eines Sicherheitsgurtes umfaßt eine vertikal, beispielsweise an der B-Säule eines Kraftfahrzeugs anzubringende Schiene 1, welche zwei im Querschnitt C-förmige seitliche Schenkel 2 aufweist, die an der Schienenrückseite über eine Rückwand 3 miteinander verbunden sind. In den seitlichen Schenkeln 2 sind jeweils Rastaufnahmen 4 vorgesehen, die, wie dargestellt, beispielsweise durch Ausdrücken entsprechender Abschnitte 5 der seitlichen Schenkel 2 erzeugt werden können.

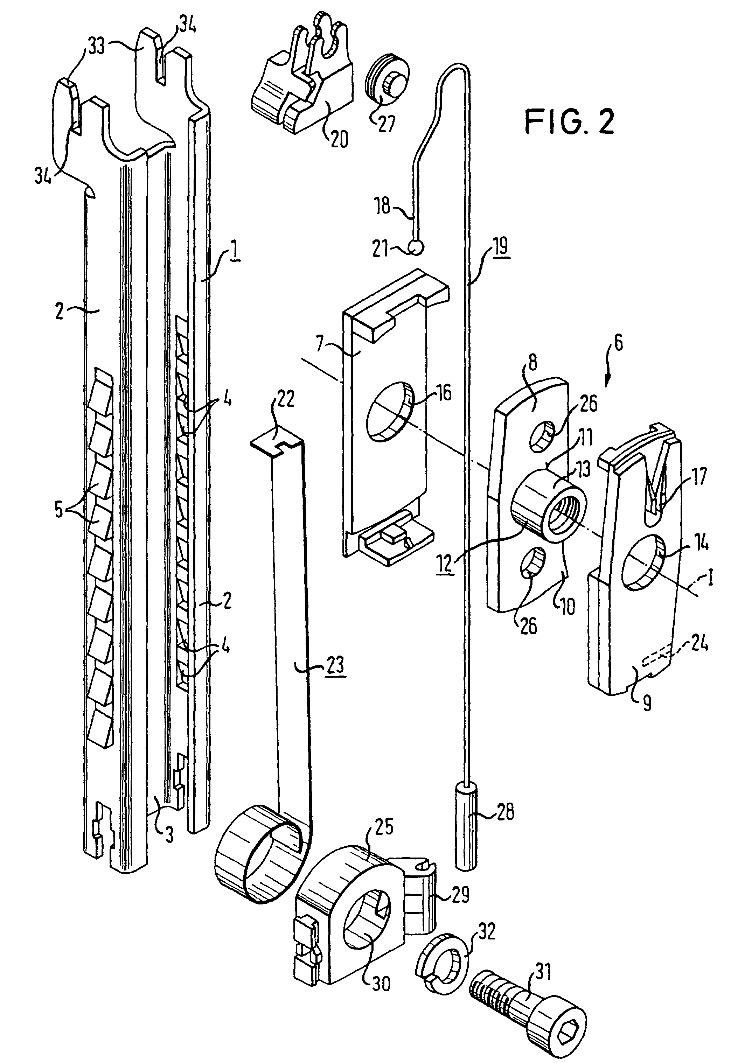

In die Schiene 1 ist ein, wie man in Fig. 2 erkennen kann, zweiteiliges Gehäuse 6 eingesetzt, dessen Gehäuseunterteil 7 längs der Schiene 1 verschiebbar geführt ist. Das Gehäuse 6 nimmt eine Klinke 8 auf, welche zusammen mit dem Gehäuseoberteil 9 relativ zum Gehäuseunterteil 7 um eine zentrale Achse I verdrehbar ist. Um ein Verdrehen des Gehäuseoberteils gegenüber der Klinke 8 zu verhindern, ist die Klinke 8 mit Ausnehmungen 26 versehen, in welche entsprechende, im Gehäuseoberteil 9 vorgesehene, hier nicht dargestellte Vorsprünge eingreifen. Einer der beiden Ausnehmungen 26 und der zugehörige Vorsprung können dabei gegenüber der zentralen Achse I versetzt sein, um einen fehlerhaften Zusammenbau durch Verdrehen von Klinke 8 und Gehäuseoberteil um 180° gegeneinander zu verhindern.

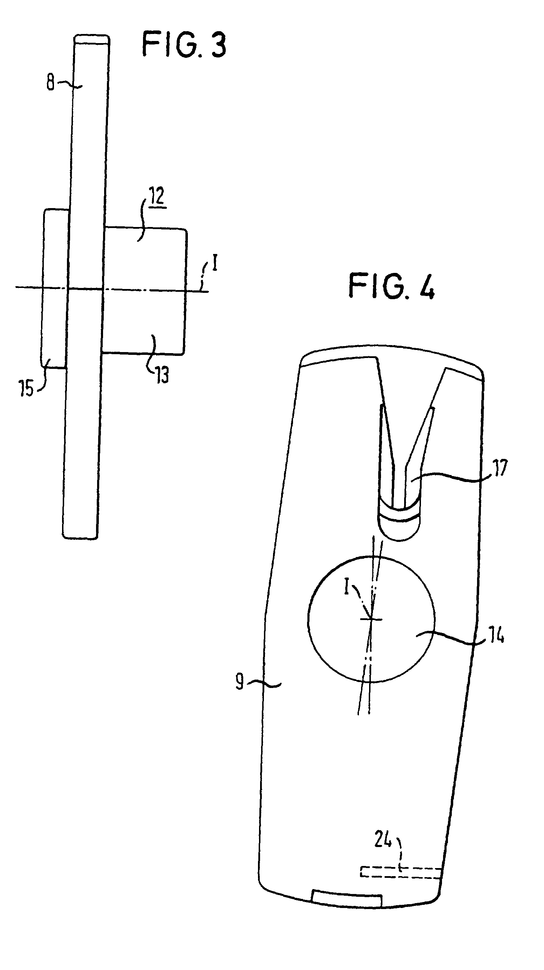

Die Klinke 8 weist eine seitlich vorstehende Nase 10 auf sowie eine zentrale Durchführung 11, in welche ein, wie aus Fig. 3 ersichtlich ist, gestufter Zapfen 12 mit seinem schmaleren Abschnitt 13 mit Preßsitz eingesetzt ist. Der schmalere Abschnitt 13 ist als Gewindebuchse ausgebildet, welche durch eine zentrale Durchführung 14 im Gehäuseoberteil 9 geführt ist und als Lager für einen entsprechenden Gewindebolzen eines hier nicht dargestellten Umlenkbeschlages dient. Der breitere Abschnitt 15 des gestuften Zapfens 12 weist einen Durchmesser auf, der an den Durchmesser einer Ausnehmung 16 im Gehäuseunterteil 7 angepaßt ist, so daß der breitere Abschnitt 15 des gestuften Zapfens 12 mit der Ausnehmung 16 im Gehäuseunterteil als Drehlager für die Klinke 8 und das Gehäuseoberteil 9 zusammenwirkt.

Das Gehäuseoberteil 9 weist in seinem oberhalb der Durchführung 14 gelegenen Abschnitt eine Aufnahme 17 für das Ende 18 eines Bowdenzuges 19 auf, welcher über eine Umlenkeinrichtung 20 von oben her zum Gehäuseoberteil 9 geführt ist. Das Ende 18 des Bowdenzuges 19 ist mit einer Verdickung 21 versehen, welche eine zugeordnete Kante in der Aufnahme 17 im Gehäuseoberteil 9 hintergreift. Wie man insbesondere in Fig. 4 erkennen kann, ist die Aufnahme 17 für den Bowdenzug 19 gegenüber der zentralen Achse I, um welche das Gehäuseoberteil 9 verdrehbar ist, horizontal versetzt angeordnet.

In der gleichen Richtung gegenüber der zentralen Achse I horizontal versetzt greift in einer im unteren Abschnitt des Gehäuseoberteils 9 vorgesehenen Ausnehmung 24 das Ende 22 einer Spiralfeder 23 an, welche mit ihrem anderen Ende in einer Federaufnahme 25 verankert ist. Die Federaufnahme 25 ist ihrerseits in das untere Ende der Schiene 1 eingesetzt und an dieser verankert. Die durch die versetzte Anordnung der Aufnahme 17 und der Ausnehmung 24 am Gehäuseoberteil 9 bei einer Höhenverstellung hervorgerufenen Drehmomente heben sich gegenseitig auf, so daß ein Verschieben des Gehäuses 6 innerhalb der Schiene 1 ohne ein Verdrehen und damit Einrasten der Klinke 8 erfolgen kann.

Wie man in Fig. 1 und 2 erkennen kann, ist die Umlenkeinrichtung 20 mit einer Umlenkrolle 27 ausgerüstet, über welche der Bowdenzug 19 geführt ist. Auf diese Weise wird die Reibung bei Betätigung des Bowdenzuges 19 verringert. Wie man ebenfalls in Fig. 1 und 2 erkennen kann, ist das Ende 28 des Mantels des Bowdenzuges 19 in einer seitlich an dem Federlager 25 vorgesehenen Aufnahme 29 gelagert. Zudem weist das Federlager 25 eine zentrale Durchführung 30 auf, durch welche ein Befestigungsbolzen 31 unter Zwischenschaltung eines Sprengrings 32 hindurchführbar ist, um auf diese Weise das untere Ende der Schiene 1 am Kraftfahrzeug zu befestigen.

Das obere Ende der Schiene 1 ist mit zwei senkrecht zur Schienenebene verlaufenden Ansätzen 33 versehen, in denen jeweils ein nach oben offener Schlitz 34 ausgebildet ist. Mit diesen Schlitzen 34 ist die Schiene 1 in eine entsprechende, am Kraftfahrzeug vorgesehene Aufnahme einsetzbar. Zur Befestigung der Schiene 1 im Kraftfahrzeug ist daher lediglich ein einziger Befestigungsbolzen 31 erforderlich.

Zur Höhenverstellung des Umlenkbeschlages wird die über das Mantelende 28 herausragende Länge des Bowdenzuges 19 entsprechend gewählt, wobei dies automatisch in Abhängigkeit von der Position des zugehörigen Fahrzeugsitzes erfolgt. Die Verbindung mit dem Fahrzeugsitz ist dabei so vorgesehen, daß bei in vorderster Stellung befindlichem Fahrzeugsitz die größte Länge des Bowdenzuges 19 vorliegt, so daß das Gehäuse 6 mit dem Lager 12 für den Umlenkbeschlag aufgrund der Kraft der Spiralfeder 23 in die unterste Stellung in der Schiene 1 bewegt wird, während in der hintersten Stellung des Fahrzeugsitzes der Bowdenzug 19 das Gehäuse 6 mit dem an der Klinke 8 vorhandenen Lager 12 für den Umlenkbeschlag entgegen der Kraft der Spiralfeder 23 in die oberste Stellung zieht. Um unterschiedliche Verschiebewege des Fahrzeugsitzes und des Umlenkbeschlages auszugleichen, kann für den Bowdenzug eine Übersetzungseinrichtung vorgesehen sein. Bei der Verschiebung des Gehäuses 6 ohne Belastung des Lagers 12 wirkt auf die Klinke 8, wie ausgeführt, kein resultierendes Drehmoment, so daß die Klinke 8 bei der Höhenverstellung in ihrer ausgerasteten Stellung verbleibt.

Bei einem Unfall wird die Klinke 8 vom Sicherheitsgurt über den Umlenkbeschlag und dessen Lager 12 belastet, wobei die übertragene Kraft stets eine in Schienenrichtung nach unten gerichtete Komponente aufweist. Dieser die Klinke 8 nach unten ziehenden Kraft wirkt die Haltekraft des durch die Sitzstellung festgelegten Bowdenzuges 19 entgegen, die auf die Klinke zur zentralen Achse I versetzt übertragen wird. Dadurch entsteht ein auf die Klinke 8 wirkendes resultierendes Drehmoment, welches die Klinke 8 um die zentrale Achse I verdreht, bis die Klinke 8 mit ihrer seitlichen Nase 10 in eine der seitlichen Rastaufnahmen 4 der Schiene 1 einrastet. Hierdurch wird eine weitere Bewegung der Klinke 8 und damit des im Lager 12 gelagerten Umlenkbeschlages längs der Schiene 1 blockiert.

Die erfindungsgemäße Einrichtung stellt damit eine einfach aufgebaute, automatisch höhenverstellbare Einrichtung zur Lagerung des oberen Befestigungs- oder Umlenkbeschlages für einen Sicherheitsgurt dar, die im Falle eines Unfalles eine schnelle und sichere Blockierung des Umlenkbeschlages gewährleistet. Es sind wenige Bauteile notwendig, die zudem bis auf das obere Gehäuseteil 9 sowohl für linksseitigen als auch für rechtsseitigen Einbau in einem Kraftfahrzeug verwendet werden können, was sowohl die Herstellungskosten erniedrigt als auch die Lagerhaltung und die Montage vereinfacht.

Um zusätzlich zu der automatischen Höhenverstellung in Abhängigkeit von der Sitzstellung eine individuelle Anpassung der Höhe des Umlenkbeschlages zu ermöglichen, kann die Umlenkeinrichtung 20 an der Oberseite der Schiene 1 so angeordnet sein, daß der Abstand der Umlenkrolle 27 vom oberen Ende der Schiene 1 manuell einstellbar ist. Durch Vergrößerung des Abstandes wird der Weg des Bowdenzuges 19 zur Aufnahme 17 im oberen Gehäuseteil 9 verlängert, so daß bei unveränderter Sitzstellung das Gehäuse 6 mit dem Lager 12 für den Umlenkbeschlag nach oben verschoben wird. Umgekehrt kann das Gehäuse 6 durch Verringerung des Abstandes nach unten verschoben werden.

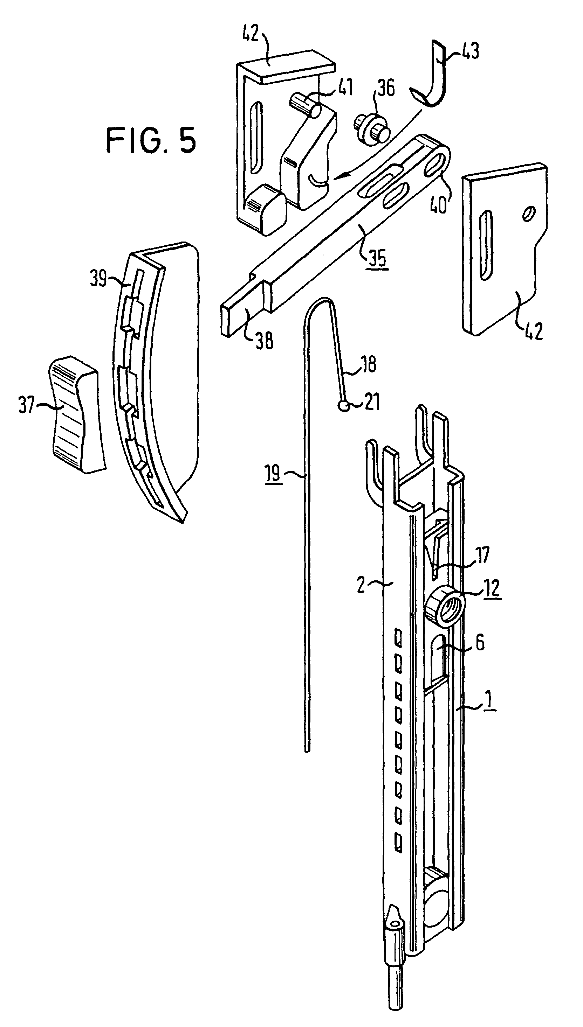

Fig. 5 zeigt eine solche Umlenkeinrichtung 20 mit zusätzlich manuell in der Höhe verstellbarem Umlenkelement für den Bowdenzug 19. Als Umlenkelement ist eine in einem Hebelelement 35 gelagerte Umlenkrolle 36 vorgesehen, über welche der Bowdenzug 19 umläuft. Das Hebelelement 35 ist an seinem einen, verjüngt ausgebildeten Ende 38 durch eine Rastenführung 39 geführt und trägt an diesem Ende 38 ein aufsteckbares Betätigungselement 37. Das andere Ende 40 des Hebelelements 35 ist auf einem Stift 41 drehbar gelagert, welcher in einem Gehäuse 42 untergebracht ist. In dem Gehäuse 42 ist eine Feder 43 mit ihrem einen Ende verankert, deren anderes Ende an dem Hebelelement 35 angreift und dieses in seine untere Schwenkstellung belastet.

Durch Verschwenken des Hebelelementes 35 um den Stift 41 wird die in dem Hebelelement 35 gelagerte Umlenkrolle 36 angehoben oder abgesenkt. Dabei rastet das Hebelelement 35 in den durch die Rastenführung 39 vorgegebenen Einraststellungen ein. Durch die Anordnung des Betätigungselementes 37 an dem von der Schwenkachse des Hebelelements 35 abgewandten Ende 38 steht zur Betätigung des Hebelelementes 35 ein großer Hebelarm zur Verfügung, so daß die näher an der Schwenkachse gelagerte Umlenkrolle 36 leicht zusammen mit dem Umlenkbeschlag angehoben werden kann.

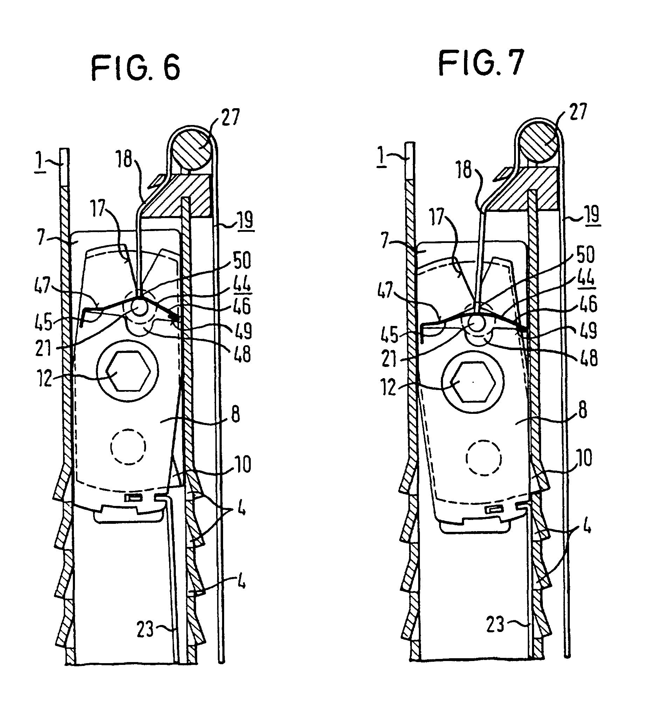

Bei dem in Fig. 6 gezeigten Teilquerschnitt durch eine weitere Variante der erfindungsgemäßen Vorrichtung ist in der Klinke 8 ein Bügel 44 mit zwei federnden Schenkeln 45, 46 vorgesehen, der sich mit seinem einen Schenkel 45 an der Klinke 8 und mit seinem anderen Schenkel 46 an dem Gleitstück 7 abstützt. Der Bügel 44 sitzt hierzu in einer eine Anlagekante 47 für die Schenkel 45, 46 des Bügels 44 bildenden Ausnehmung 48 der Klinke 8, die so bemessen ist, daß der Bügel 44 mit seinen beiden Schenkeln 45, 46 zwischen einer ungespreizten Stellung, in welcher die Schenkel 45, 46 an der Anlagekante 47 anliegen, und einer gespreizten Stellung, in welcher die beiden Schenkel 45, 46 weiter auseinandergeschwenkt sind, beweglich ist. Die Ausnehmung 48 mündet auf einer Seite in eine seitliche Öffnung 49 in der Klinke 8, durch welche der eine Schenkel 46 des Bügels 44 in gespreizter Stellung herausgreifen und sich an dem Gleitstück 7 abstützen kann.

Die Ausnehmung 48 für den Bügel 44 ist so im Bereich der Aufnahme 17 für das Ende 18 des Bowdenzugs 19 angeordnet, daß die Verdickung 21 des Bowdenzugs 19 bei eingesetztem Bowdenzug in der Ausnehmung 48 zu liegen kommt. Der Bowdenzug 19 ist dabei nicht nur in die Aufnahme 17 sondern zugleich in den entsprechend ausgestalteten Bügel 44 eingehängt, so daß der Bowdenzug 19 in gespanntem Zustand den Bügel 44 gegen die von der Ausnehmung 48 gebildete Anlagekante 47 zieht. Als Gegenkraft wirkt hierbei die in entgegengesetzter Richtung an der Klinke 8 angreifende Spiralfeder 23.

Bei gespanntem Bowdenzug 19 und vorhandener Gegenkraft der Spiralfeder 23 befindet sich der Bügel 44 also in seiner gegen die Anlagekante 47 gehaltenen Stellung. Die beiden Schenkel 45 und 46 des Bügels 44 schwenken dadurch soweit zusammen, daß sich der Schenkel 46 innerhalb der Klinke 8 befindet und sich nicht am Gleitstück 7 abstützt. Diese ungespreizte Stellung hält der Bügel 44 unabhängig von der Verschiebestellung des Bowdenzugs 19 so lange ein, wie die durch Bowdenzug 19 und Spiralfeder 23 auf die Klinke 8 ausgeübte Spannkraft vorhanden ist. Bei einem Reißen oder Aushängen des Bowdenzuges, oder auch bei einem Bruch der Spiralfeder 23, fällt diese Spannkraft weg. Der Bügel 44 wird daher dann nicht mehr gegen die Anlagekante 47 gezogen, so daß er aufspreizt und mit seinem Schenkel 46 aus der Öffnung 49 in der Klinke 8 herausgreift. Dieser Schenkel 46 stützt sich dadurch an der gegenüberliegenden Innenwand des Gleitstücks 7 ab, so daß über den anderen Schenkel 45 des Bügels 44 auf die Klinke 8 eine Schwenkkraft ausgeübt wird. Diese Schwenkkraft wirkt in Einrastrichtung der Klinke 8, so daß die Klinke 8 in eine der Rastaufnahmen 4 einrastet und das Gleitstück mit dem Lager 12 für den Umlenkbeschlag gegen eine weitere Verschiebung blockiert wird.

Mit geringem Aufwand und ohne zusätzlichen Platzbedarf wird so sichergestellt, daß auch bei einem Bruch oder einem Aushängen des Bowdenzuges oder einem Federbruch ein sicheres Einrasten der Klinke 8 und damit ein Blockieren der vertikalen Verstellung des oberen Umlenkbeschlages eines Sicherheitsgutsystems im Ernstfall gewährleistet ist.

## Patentansprüche

1. Einrichtung zur automatisch höhenverstellbaren Lagerung des oberen Befestigungs- oder Umlenkbeschlages für einen Sicherheitsgurt in einem Fahrzeug, mit einer im wesentlichen vertikal angeordneten Schiene (1), welche seitliche Rastaufnahmen (4) aufweist, mit einem längs der Schiene (1) verschiebbar geführten Gleitstück (7), in welchem eine Klinke (8) mit einer seitlich vorstehenden Einrastnase (10) zwischen einer Einraststellung und einer Ausraststellung um eine zur Schienenlängsrichtung senkrechte Achse (I) verschwenkbar gelagert ist, mit einem an der Klinke (8) in der einen Verschieberichtung angreifenden, in Abhängigkeit von der Sitzstellung des zugeordneten Fahrzeugsitzes gesteuerten Verstellelement (19) und mit einem mit dem Gleitstück beweglichen Lager (12) für den Umlenkbeschlag, welches derart an der Klinke (8) angreift, daß die Klinke (8) bei einer Belastung des Lagers (12) durch den Gurt in ihre Einraststellung verschwenkt wird,
**dadurch gekennzeichnet,**
**daß** ein an der Klinke (8) in der anderen Verschieberichtung angreifendes Rückstellelement (23) vorgesehen ist, und daß das Verstellelement (19) und das Rückstellelement (23) an der Klinke (8) an zwei auf derselben Seite der Schwenkachse (I) angeordneten Punkten (17, 24) angreifen.

2. Einrichtung nach Anspruch 1,
**dadurch gekennzeichnet,**
**daß** das Lager (12) für den Umlenkbeschlag gegenüber dem Angriffspunkt (17) des Verstellelements (19) horizontal versetzt an der Klinke (8) angeordnet ist.

3. Einrichtung nach Anspruch 2,
**dadurch gekennzeichnet,**
**daß** das Gleitstück (7) eine bevorzugt zentrale Drehlagerung (16) für die Klinke (8) aufweist.

4. Einrichtung nach Anspruch 3,
**dadurch gekennzeichnet,**
**daß** das an der Klinke (8) vorhandene Lager (12) für den Umlenkbeschlag auf der Drehachse (I) der Klinke (8) im Gleitstück (7) vorgesehen ist.

5. Einrichtung nach Anspruch 4,
**dadurch gekennzeichnet,**
**daß** die Klinke (8) eine Durchführung (11) aufweist, durch welche ein längsgestufter Zapfen (12) mit seinem schmaleren, als Lager für den Umlenkbeschlag ausgebildeten Abschnitt (13) hindurchgeführt ist, und daß der breitere Abschnitt (15) des Zapfens (12) als Drehlagerzapfen ausgebildet ist, welcher in einer entsprechenden kreisförmigen Ausnehmung (16) des Gleitstücks (7) drehbar gelagert ist.

6. Einrichtung nach einem der vorhergehenden Ansprüche,
**dadurch gekennzeichnet,**
**daß** die Klinke (8) in einem zweiteiligen Gehäuse (6) gelagert ist, dessen Gehäuseunterteil (7) als Gleitstück dient und dessen Gehäuseoberteil (9) zusammen mit der Klinke (8) gegenüber dem Gehäuseunterteil (7) in der Schienenebene verschwenkbar ist, wobei das Verstellelement (19) und das Rückstellelement (23) am Gehäuseoberteil (9) angreifen.

7. Einrichtung nach einem der vorhergehenden Ansprüche,
**dadurch gekennzeichnet,**
**daß** als Verstellelement ein Seil, insbesondere ein Bowdenzug (19) dient.

8. Einrichtung nach Anspruch 7,
**dadurch gekennzeichnet,**
**daß** das Seil (19) über eine Umlenkeinrichtung (20) geführt ist und von oben her an der Klinke (8) oder am Gehäuseoberteil (9) angreift.

9. Einrichtung nach einem der vorhergehenden Ansprüche,
**dadurch gekennzeichnet,**
**daß** als Rückstellelement eine Spiralfeder (23) vorgesehen ist, die in einer in der Schiene (1) verankerbaren Federhülse (25) gelagert ist, welche eine zentrale Durchführung (30) für einen Befestigungsbolzen (31) aufweist.

10. Einrichtung nach Anspruch 9,
**dadurch gekennzeichnet,**
**daß** an der Federhülse (25) eine seitliche Aufnahme (29) für das Ende (28) des Mantels des Bowdenzugs (19) vorgesehen ist.

11. Einrichtung nach einem der vorhergehenden Ansprüche,
**dadurch gekennzeichnet,**
**daß** an der Klinke (8) ein Spreizfederelement (44) vorgesehen ist, welches durch die zwischen Verstellelement (19) und Rückstellelement (23) wirkende Spannkraft in ungespreizter Stellung gehalten wird, und daß das Spreizfederelement (44) so zwischen Klinke (8) und Gleitstück (7) oder zwischen Klinke (8) und Schiene (1) angeordnet ist, daß die Klinke (8) bei Wegfall der Spannkraft von dem Spreizfederelement (44) in Richtung auf ihre Einraststellung belastet wird.

12. Einrichtung nach Anspruch 11,
**dadurch gekennzeichnet,**
**daß** das Spreizfederelement als Bügel (44) mit zwei federnden Schenkeln (45, 46) ausgebildet ist, der sich in gespreiztem Zustand mit seinem einen Schenkel (45) an der Klinke (8) und mit seinem anderen Schenkel (46) am Gleitstück (7) abstützt und dessen Spannweite in Abhängigkeit von der Spannkraft veränderlich ist.

13. Einrichtung nach Anspruch 12,
**dadurch gekennzeichnet,**
**daß** die Klinke (8) eine Anlagekante (47) mindestens für jeweils einen Teil der beiden Schenkel (45, 46) des Bügels (44) aufweist, und daß der Bügel (44) durch die Spannkraft so gegen die Anlagekante (47) gehalten wird, daß die beiden Schenkel so weit zusammen geschwenkt sind, daß die Klinke (8) von der Schwenkkraft des Bügels (44) entlastet ist.

14. Einrichtung nach Anspruch 13,
**dadurch gekennzeichnet,**
**daß** die Anlagekante (47) durch eine Ausnehmung (48) im Bereich des Angriffspunkts (17) des Verstellelements (19) an der Klinke (8) gebildet ist, und daß das Verstellelement (19) an der Verbindungsstelle (50) der beiden Schenkel (45, 46) des Bügels (44) angreift und diesen gegen die Anlagekante (47) zieht.

15. Einrichtung zur automatisch höhenverstellbaren Lagerung des oberen Befestigungs- oder Umlenkbeschlages für einen Sicherheitsgurt in einem Fahrzeug, mit einer im wesentlichen vertikal angeordneten Schiene (1), welche seitliche Rastaufnahmen (4) aufweist, mit einem längs der Schiene (1) verschiebbar geführten Gleitstück (7), in welchem eine Klinke (8) mit einer seitlich vorstehenden Einrastnase (10) zwischen einer Einraststellung und einer Ausraststellung um eine zur Schienenlängsrichtung senkrechte Achse (I) verschwenkbar gelagert ist, mit einem an der Klinke (8) in Verschieberichtung von oben her angreifenden, über eine oberhalb der Schiene (1) vorhandene Umlenkeinrichtung (20) geführten Bowdenzug (19), nach einem der vorhergehenden Ansprüche,
**dadurch gekennzeichnet,**
**daß** der Abstand der Umlenkeinrichtung (20) für den Bowdenzug (19) vom oberen Ende der Schiene (1) manuell verstellbar ist.

16. Einrichtung nach Anspruch 15,
**dadurch gekennzeichnet,**
**daß** die Umlenkeinrichtung (20) ein um eine im wesentlichen horizontale Achse (II) drehbar gelagertes Hebelelement (35) aufweist, welches ein Umlenkelement (36) für den Bowdenzug (19) und ein Betätigungselement (37) trägt, und daß das Umlenkelement (36) näher an der Drehachse (II) des Hebelelementes (35) angeordnet ist als das Betätigungselement (37).

17. Einrichtung nach Anspruch 15 oder 16,
**dadurch gekennzeichnet,**
**daß** zur Umlenkung des Bowdenzugs (19) eine drehbar gelagerte Umlenkrolle (27) vorgesehen ist.

18. Einrichtung nach einem der vorhergehenden Ansprüche,
**dadurch gekennzeichnet,**
**daß** die Schiene (1) an zwei einander gegenüberliegenden Seiten mit Rastaufnahmen (4) versehen ist.

19. Einrichtung nach einem der vorhergehenden Ansprüche,
**dadurch gekennzeichnet,**
**daß** die Schiene (1) an ihrem oberen Ende Schlitze (33) zum Einhängen in eine am Fahrzeug vorhandene Aufnahme aufweist.

## Claims

1. Device for the automatically height-adjustable mounting of the upper fastening or deflection fitting for a seat belt in a vehicle, having an essentially vertically arranged rail (1) which has lateral latching retainers (4), having a slider (7) which is guided displaceably along the rail (1) and in which a catch (8) having a laterally protruding latching lug (10) is mounted in a manner such that it can pivot about an axis (I), which is perpendicular with respect to the longitudinal direction of the rail, between a latching position and a disengaged position, having an adjusting element (19) which acts on the catch (8) in the one direction of displacement and is controlled as a function of the seat position of the associated vehicle seat, and having a bearing (12) for the deflection fitting, the said bearing being movable together with the slider and acting on the catch (8) in such a manner that, when the belt subjects the bearing (12) to a load, the catch (8) is pivoted into its latching position, **characterized in that** a restoring element (23) acting on the catch (8) in the other direction of displacement is provided, and **in that** the adjusting element (19) and the restoring element (23) act on the catch (8) at two points (17, 24) arranged on the same side of the pivot axis (I).

2. Device according to Claim 1, **characterized in that** the bearing (12) for the deflection fitting is arranged offset horizontally on the catch (8) with respect to the engagement point (17) of the adjusting element (19).

3. Device according to Claim 2, **characterized in that** the slider (7) has a preferably central rotational mounting (16) for the catch (8).

4. Device according to Claim 3, **characterized in that** the bearing (12) which is present on the catch (8) and is intended for the deflection fitting is provided in the slider (7) on the axis of rotation (I) of the catch (8).

5. Device according to Claim 4, **characterized in that** the catch (8) has a bushing (11) through which a longitudinally stepped journal (12) is guided by its narrower section (13), which is designed as a bearing for the deflection fitting, and **in that** the wider section (15) of the journal (12) is designed as a rotational bearing journal which is mounted rotatably in a corresponding circular recess (16) of the slider (7).

6. Device according to one of the preceding claims, **characterized in that** the catch (8) is mounted in a two-part housing (6), the housing lower part (7) of which serves as a slider and the housing upper part (9) of which can be pivoted together with the catch (8) with respect to the housing lower part (7) in the plane of the rail, in which case the adjusting element (19) and the restoring element (23) act on the housing upper part (9).

7. Device according to one of the preceding claims, **characterized in that** a cable, in particular a Bowden cable (19), serves as the adjusting element.

8. Device according to Claim 7, **characterized in that** the cable (19) is guided via a deflection device (20) and acts from above on the catch (8) or on the housing upper part (9).

9. Device according to one of the preceding claims, **characterized in that** a spiral spring (23) is provided as the restoring element and is mounted in a spring sleeve (25) which can be secured in the rail (1) and has a central bushing (30) for a fastening bolt (31).

10. Device according to Claim 9, **characterized in that** a lateral retaining (29) for the end (28) of the sheath of the Bowden cable (19) is provided on the spring sleeve (25).

11. Device according to one of the preceding claims, **characterized in that** an expanding spring element (44) is provided on the catch (8) and is held in an unexpanded position by the tensioning force acting between the adjusting element (19) and restoring element (23), and **in that** the expanding spring element (44) is arranged between the catch (8) and slider (7) or between the catch (8) and rail (1) in such a manner that, when the tensioning force ceases, the catch (8) is loaded by the expanding spring element (44) in the direction of its latching position.

12. Device according to Claim 11, **characterized in that** the expanding spring element is designed as a clip (44) having two resilient legs (45, 46), the clip being supported, in the expanded state, with its one leg (45) on the catch (8) and with its other leg (46) on the slider (7) and its span being changeable as a function of the tensioning force.

13. Device according to Claim 12, **characterized in that** the catch (8) has a bearing edge (47) at least for one part in each case of the two legs (45, 46) of the clip (44), and **in that** the clip (44) is held against the bearing edge (47) by the tensioning force in such a manner that the two legs are pivoted together to an extent sufficient for the catch (8) to be relieved of the pivoting force of the clip (44).

14. Device according to Claim 13, **characterized in that** the bearing edge (47) is formed by a recess (48) in the region of the engagement point (17) of the adjusting element (19) on the catch (8), and **in that** the adjusting element (19) acts on the connecting point (50) of the two legs (45, 46) of the clip (44) and pulls the latter against the bearing edge (47).

15. Device for the automatically height-adjustable mounting of the upper fastening or deflection fitting for a seat belt in a vehicle, having an essentially vertically arranged rail (1) which has lateral latching retainers (4), having a slider (7) which is guided displaceably along the rail (1) and in which a catch (8) having a laterally protruding latching lug (10) is mounted in a manner such that it can pivot about an axis (I), which is perpendicular with respect to the longitudinal direction of the rail, between a latching position and a disengaged position, and having a Bowden cable (19) which engages on the catch (8) from above in the direction of displacement and is guided via a deflection device (20) present above the rail (1), according to one of the preceding claims, **characterized in that** the distance of the deflection device (20) for the Bowden cable (19) from the upper end of the rail (1) can be adjusted manually.

16. Device according to Claim 15, **characterized in that** the deflection device (20) has a lever element (35) which is mounted rotatably about an essentially horizontal axis (II) and bears a deflection element (36) for the Bowden cable (19) and an actuating element (37), and **in that** the deflection element (36) is arranged closer to the axis of rotation (II) of the lever element (35) than the actuating element (37).

17. Device according to Claim 15 or 16, **characterized in that** a rotatably mounted deflection pulley (27) is provided for deflecting the Bowden cable (19).

18. Device according to one of the preceding claims, **characterized in that** the rail (1) is provided on two mutually opposite sides with latching retainers (4).

19. Device according to one of the preceding claims, **characterized in that** the rail (1) has slots (33) at its upper end for fitting it into a holder provided on the vehicle.

## Revendications

1. Dispositif pour le montage réglable automatiquement en hauteur de l'armature d'ancrage ou de renvoi supérieure pour une ceinture de sécurité dans un véhicule, avec un rail (1) disposé sensiblement verticalement qui présente latéralement des encoches de verrouillage (4), avec une pièce coulissante (7) guidée de manière mobile le long du rail (1), dans laquelle une clenche (8), avec un nez de verrouillage (10) dépassant latéralement, est disposée de manière à pivoter entre une position de verrouillage et une position de déverrouillage autour d'un axe (I) perpendiculaire à la direction longitudinale du rail, avec un élément de réglage (19) agissant sur la clenche (8) dans l'un des sens de déplacement, commandé en fonction de la position du siège du véhicule auquel il est affecté, et avec un palier (12) pour l'armature de renvoi, mobile avec la pièce coulissante, qui agit sur la clenche (8) de sorte que la clenche (8), sous l'effet d'un effort exercé sur le palier (12), est pivotée par la ceinture dans sa position de verrouillage,
**caractérisé en ce que**
un élément de rappel (23) agissant sur la clenche (8) dans l'autre sens de déplacement est prévu, et **en ce que** l'élément de réglage (19) et l'élément de rappel (23) agissent sur la clenche (8) en deux points (17, 24) disposés du même côté de l'axe de pivotement (I).

2. Dispositif selon la revendication 1,
**caractérisé en ce que**
le palier (12) pour l'armature de renvoi est disposé sur la clenche (8) vis-à-vis du point d'attaque (17) de l'élément de réglage (19), de manière décalée horizontalement.

3. Dispositif selon la revendication 2,
**caractérisé en ce que**
la pièce coulissante (7) présente un montage pivotant (16) de préférence central pour la clenche (8).

4. Dispositif selon la revendication 3,
**caractérisé en ce que**
le palier (12) pour l'armature de renvoi présent sur la clenche (8) est prévu sur l'axe de rotation (I) de la clenche (8) dans la pièce coulissante (7).

5. Dispositif selon la revendication 4,
**caractérisé en ce que**
la clenche (8) comporte un passage (11) par lequel passe la partie (13) plus étroite, configurée comme palier pour l'armature de renvoi, d'un axe (12) étagé sur sa longueur, et **en ce que** la partie plus large (15) de l'axe (12) est configurée comme axe de palier de pivotement monté pivotant dans un évidement (16) circulaire correspondant de la pièce coulissante (7).

6. Dispositif selon l'une des revendications précédentes,
**caractérisé en ce que**
la clenche (8) est disposée dans un boîtier (6) en deux parties dont la partie inférieure de boîtier (7) fait office de pièce coulissante et dont la partie supérieure de boîtier (9), avec la clenche (8), est pivotante dans le plan du rail par rapport à la partie inférieure de boîtier (7), l'élément de réglage (19) et l'élément de rappel (23) agissant sur la partie supérieure de boîtier (9).

7. Dispositif selon l'une des revendications précédentes,
**caractérisé en ce que**
un câble, en particulier un câble Bowden (19) fait office d'élément de réglage.

8. Dispositif selon la revendication 7,
**caractérisé en ce que**
le câble (19) est guidé par un dispositif de renvoi (20) et agit par le haut sur la clenche (8) ou sur la partie supérieure du boîtier (9).

9. Dispositif selon l'une des revendications précédentes,
**caractérisé en ce que**
un ressort spiral (23) monté dans un boîtier de ressort (25) pouvant être ancré dans le rail (1) et présentant un passage central (30) pour un boulon de fixation (31), est prévu en tant qu'élément de rappel.

10. Dispositif selon la revendication 9,
**caractérisé en ce que**
un logement latéral (29) est prévu sur le boîtier de ressort (25) pour l'extrémité (28) de la gaine du câble Bowden (19).

11. Dispositif selon l'une des revendications précédentes,
**caractérisé en ce que**
un élément ressort écarteur (44) est prévu sur la clenche (8), qui est maintenu en position comprimée par l'effort de tension agissant entre l'élément de réglage (19) et l'élément de rappel (23), et **en ce que** l'élément ressort écarteur (44) est disposé entre la clenche (8) et la pièce coulissante (7) ou entre la clenche (8) et le rail (1) de telle sorte que, lors de la disparition de l'effort de tension, l'élément ressort écarteur (44) agit sur la clenche (8) dans la direction de la position de verrouillage de celle-ci.

12. Dispositif selon la revendication 11,
**caractérisé en ce que**
l'élément ressort écarteur est configuré en forme d'arceau (44) avec deux branches élastiques (45, 46), qui, à l'état écarté, appuie par l'une de ses branches (45) sur la clenche (8) et par son autre branche (46) sur la partie coulissante (7), et dont l'ouverture est variable en fonction de l'effort de tension.

13. Dispositif selon la revendication 12,
**caractérisé en ce que**
la clenche (8) présente une face d'appui (47) au moins pour une partie de chacune des deux branches (45, 46) de l'arceau (44), et **en ce que** l'arceau (44) est maintenu par l'effort de tension contre la face d'appui (47) de telle sorte que les deux branches sont pivotées l'une et l'autre de façon à ce que la clenche (8) soit libérée de l'effort de pivotement de l'arceau (44).

14. Dispositif selon la revendication 13,
**caractérisé en ce que**
la face d'appui (47) est formée par un évidement (48) dans la zone du point d'attaque (17) de l'élément de réglage (19) sur la clenche (8), et **en ce que** l'élément de réglage (19) agit au point de liaison (50) des deux branches (45, 46) de l'arceau (44) et tire celui-ci contre la face d'appui (47).

15. Dispositif pour le montage réglable automatiquement en hauteur de l'armature d'ancrage ou de renvoi supérieure pour une ceinture de sécurité dans un véhicule, avec un rail (1) disposé sensiblement verticalement qui présente latéralement des encoches de verrouillage (4), avec une pièce coulissante (7) guidée de manière mobile le long du rail (1), dans laquelle une clenche (8), avec un nez de verrouillage (10) dépassant latéralement, est disposée de manière à pivoter entre une position de verrouillage et une position de déverrouillage autour d'un axe (I) perpendiculaire à la direction longitudinale du rail, avec un câble Bowden (19) agissant sur la clenche (8) depuis le haut dans le sens du déplacement et guidé par un dispositif de renvoi (20) disposé au-dessus du rail (1), selon l'une des revendications précédentes,
**caractérisé en ce que**
la distance du dispositif de renvoi (20) du câble Bowden (19) par rapport à l'extrémité supérieure du rail (1) est réglable manuellement.

16. Dispositif selon la revendication 15,
**caractérisé en ce que**
le dispositif de renvoi (20) présente un élément levier (35) monté pivotant autour d'un axe sensiblement horizontal (II) et portant un élément de renvoi (36) pour le câble Bowden (19) et un élément d'actionnement (37), et **en ce que** l'élément de renvoi (36) est disposé plus près de l'axe de rotation (II) de l'élément levier (35) que l'élément d'actionnement (37).

17. Dispositif selon la revendication 15 ou 16,
**caractérisé en ce que**
un galet de renvoi (27) monté tournant est prévu pour le renvoi du câble Bowden (19).

18. Dispositif selon l'une des revendications précédentes,
**caractérisé en ce que**
le rail (1) est muni, sur deux côtés se faisant face, d'encoches de verrouillage (4).

19. Dispositif selon l'une des revendications précédentes,
**caractérisé en ce que**
le rail (1) présente, à son extrémité supérieure, des rainures (33) pour l'accrochage dans un logement prévu dans le véhicule.
